# EUROPEAN PATENT SPECIFICATION

(11) **EP 0 735 179 B1**
(45) Date of publication and mention of the grant of the patent: **13.09.2000**
(21) Application number: 95120127.6
(22) Date of filing: 20.12.1995
(51) Int. Cl.: D06F 39/10

(54) **Filter installed in a water-flowing path of a washing machine**
Laugefilter in einer Waschmaschine
Filtre pour l'eau de lessive dans une machine à laver

(30) Priority: 31.03.1995 KR 9506463
(43) Date of publication of application: 02.10.1996
(73) Proprietor: DAEWOO ELECTRONICS CO., LTD, Seoul (KR)
(72) Inventor: Lee, Seung-Jun, Buk-Ku, Incheon (KR); Jung, Chung-Sik, Seo-Ku, Incheon (KR)
(74) Representative: Lewald, Dietrich, Dipl.-Ing.

(56) References cited:
- DE-A- 1 585 818
- FR-A- 1 100 713
- US-A- 2 201 790
- US-A- 2 586 508

## Description

### Background of the Invention

### 1. Field of the Invention

The present invention relates to a filter for a washing machine, and more particularly to a filter installed in a water-flowing path of a washing machine, which filters the washing liquid or the rinsing water in the washing machine, thereby improving the washing effect of the washing machine and protecting the water-flowing path, and which can be easily assembled and disassembled outside the washing machine, and thereby can be easily cleaned at any time.

### 2. Prior Arts

Generally, a washing machine washes, rinses, and dehydrates articles by the rotation of pulsator in a washing tub of the washing machine or the rotation of the washing tub. In the initial or middle stage of washing, rinsing, or dehydrating of the washing machine, the washing liquid or the rinsing water is introduced into or drained from the washing tub.

Recently, research and development have been focused on new washing machines in which the washing liquid or the rinsing water once having washed or rinsed the articles in the washing tub is not drained out directly but recirculated and sprayed from above the washing tub. The new washing machines aim to improve the washing and rinsing effect of the washing machine and to reduce the required washing liquid or rinsing water.

DE-A-1 585 818 discloses a filter for a washing machine. The filter comprises a body in which is inserted an arcuate filter member. The filter member comprises a disc with a guidance means at its circumference protruding radially outward. The disc further has on its one side a central projection which can be inserted in a recess in a locking lid. On the opposite side an arcuate filter is integrally fixed to the disc. When the filter member is inserted into the body and the locking lid is screwed to the body the position of the filter is defined relative to the body by the guidance means. The filter therefore always is in a correct position relative to the flow of the washing liquid. For removing the filter from the body first a further lid has to be opened and water present in the body has to be drained through a separate tube. Cleansing of the filter therefore is complicated.

US Patent No. 5,167,722 issued to Pastryk et al discloses a spray rinse process to effect a greater degree of soil and detergent removal. In Pastryk et al s spray rinse process, after the rinsing water rinsed the articles in the washing tub, it is recirculated and sprayed back onto the articles from above the washing tub.

However, in Pastryk et al.'s spray rinse process, since the rinsing water is directly recirculated and sprayed back onto the articles without being filtered after having rinsed the articles in the washing tub, impurities which may be entrained in the recirculating rinsing water may be recirculated and sprayed onto the articles along with the rinsing water. Such recirculation and spray of the impurities deteriorates the washing effect of the washing machine. Especially, in cases that the articles have a large quantity of strong impurities or dirt and that the washing liquid is recirculated in the course of washing process, the dirt or impurities in the washing liquid or the rinsing water may block off the recirculation path to thereby paralyze the function of the washing machine, or they may damage the recirculation path.

U.S. Patent No. 5,353,612 issued to Noguchi et al. discloses a single-tub washing machine having a detachable filter. Noguchi et al.'s filter is installed at a cylindrical wall of a washing tub of the washing machine. Therefore, the filter is improper for filtering the washing liquid or rinsing water recirculating in such a recirculation path as is provided in the above described washing machine. Further, the user can not disassemble the filter outside the washing tub but only in the washing tub without bending himself into the washing tub.

### Summary of the Invention

The present invention has been made to overcome the above described problems of the prior arts, and accordingly it is an object of the present invention to provide a filter installed in a water-flowing path of a washing machine, which filters the washing liquid or the rinsing water in the washing machine, thereby improving the washing effect of the washing machine and protecting the water-flowing path, and which can be easily assembled and disassembled outside the washing machine, and thereby can be easily cleaned at any time.

To achieve the above object, the present invention provides a filter for a washing machine including a housing, a washing tub for accommodating articles to be washed in the washing machine, a first water-flowing path interconnected to the washing tub and a second water-flowing path interconnected to the first water-flowing path, the washing tub being mounted in the housing, the filter comprising:
a body installed in the washing machine, the body being fixed to and penetrating through the housing, the body being connected to the first water-flowing path and the second water-flowing path,
the body comprising a first tube connected to the first water-flowing path, a second tube connected to the first water-flowing path, and an opening defined between the first tube and the second tube, the first tube and the second tube being interconnected through the opening to each other,
the first tube comprising a cylindrical side wall, a rear wall formed integrally with a rear end of the cylindrical side wall, and a neck section formed integrally with and extending backward from the rear wall, the cylindrical side wall having a first inner space interconnected to a second inner space of the neck section, the second inner space being interconnected to the first water-flowing path,
a first means detachably fixed in the body from outside of the housing, the first means filtering a washing liquid or a rinsing water flowing from the first water-flowing path through the body to the second water-flowing path when the first means is inserted and fixed in the body;
a second means assembled with the first means so as to detachably fixing the first means in the body;
a third means for assembling the first means with the second means; and
a fourth means for preventing the washing liquid or the rinsing water from leaking between the body and the first means when the first means is fixed in the body.

The first means includes an arcuate mesh plate longitudinally extending and being detachably inserted in the first tube, the arcuate mesh plate having a plurality of pores formed in the arcuate mesh plate, the arcuate mesh plate separating the first inner space into a first chamber and a second chamber, the first chamber and the second chamber being interconnected to each other through the pores.

The cylindrical side wall has a pair of mountain-shaped thresholds and a pair of first guide rails formed on the inner surface of the cylindrical side wall, the mountain-shaped thresholds and the first guide rails respectively extending longitudinally, and the arcuate mesh plate has a pair of plane bulwarks formed integrally with opposite sides of the arcuate mesh plate, and a pair of second guide rails respectively formed on the outer surface of each bulwark, the bulwarks and the second guide rails respectively extending longitudinally, the bulwarks sliding along the mountain-shaped thresholds and the first guide rails sliding along the second guide rails while the mesh plate is inserted into the first tube.

The second means includes a bell-mouth formed integrally with a front end of the cylindrical side wall, and a locking lid assembled with the mesh plate and being detachably locked in the bell-mouth.

The bell-mouth includes a first annular wall, a second annular wall having a diameter smaller than that of the first annular wall, a first step disposed between and formed integrally with the first annular wall and the second annular wall, and a second step formed integrally with the inner end of the second annular wall and the front end of the cylindrical side wall, so that the inner circumference of the second step has a diameter equal to the inner diameter of the cylindrical side wall, the first annular wall having a plurality of first locking protuberances formed at the inner surface of the first annular wall, the first locking protuberances protruding radially inward from the first annular wall and being spaced apart from each other with regular circumferential intervals,
and the locking lid includes an annular base, a center cylinder extending downward from the inner circumference of the annular base and at a right angle to the annular base, and an outer cylinder extending upward from the outer circumference of the annular base and at a right angle to the annular base, the outer cylinder having a plurality of second locking protuberances formed on the outer surface of the outer cylinder so as to be engaged with the first locking protuberances.

The second locking protuberances are disposed on the lower end of the outer surface of the outer cylinder, each of the second locking protuberance having a trapezoidal shape, each of the second locking protuberance including a lower surface extending in the circumferential direction of the outer cylinder, an upper surface extending in the circumferential direction and more shortly than the lower surface, a side surface extending longitudinally between the lower surface and the upper surface, and an inclined surface extending with an inclination from the lower surface to the upper surface, and thereby each of the first locking protuberances slides along the inclined surface and then is tightly engaged with the upper surface of each of the second locking protuberances when the locking lid is rotated after being inserted in the bell-mouth.

The third means includes a mesh head incorporated with the front end of the arcuate mesh plate, and a pair of first arcuate engagement shelves protruding radially outward from the lower end of the center cylinder in opposite directions to each other, the mesh head including a disc-shaped base, a cylindrical bobbin extending longitudinally outward from the outer circumference of the disc-shaped base and at a right angle to the disc-shaped base, and a third annular rim protruding radially outward from the front end of the cylindrical bobbin, the cylindrical bobbin having a pair of opposite arcuate holding brackets extending longitudinally from the upper surface of the disc-shaped base, each of the arcuate holding brackets having a second arcuate engagement shelf formed at the upper end of each of the arcuate holding brackets, and thereby the third annular rim is in contact with the annular base of the locking lid, each of the first arcuate engagement shelves is slidably engaged with the second arcuate engagement shelf, so that the locking lid is assembled with the mesh head in a relatively rotatable relation.

The locking lid further includes a cylindrical knob formed integrally with the center cylinder and extending upward from the inner circumference of the annular base, and a pair of opposite ridges disposed between and formed integrally with the second annular rim and the upper surface of the cylindrical knob.

More preferably, a pair of opposite key holes are formed in the annular base of the locking lid, and a pair of key protuberances extend downward from the ridges through the key holes beyond the annular base.

A pair of opposite first stoppers and a pair of opposite second stoppers are respectively formed integrally with the disc-shaped base and the cylindrical bobbin, each of the first stoppers being disposed every between the arcuate holding brackets, each of the second stoppers being disposed near one end of each of the arcuate holding brackets, and each of the key protuberances being movable between each of the first stoppers and each of the second stoppers, and thereby a travelling range of each of the key protuberances is confined between each of the first stoppers and each of the second stoppers, and the locking lid can rotate relatively to the mesh member within a limitation.

The fourth means includes an annular packing tightly wound on the cylindrical bobbin of the mesh head, the annular packing being compressed between the second step and the third annular rim when the first locking protuberances are engaged with the second locking protuberances.

The above described filter according to the present invention filters the washing liquid passing therethrough when the washing liquid is drained or recirculated.

In the filter, the washing liquid flows as follows. The washing liquid is introduced from the discharge pipe through the neck section into the first chamber of the body. The washing liquid in the first chamber flows through the pores of the arcuate mesh plate into the second chamber, so that the arcuate mesh plate filters off impurities from the washing liquid.

The washing liquid in the second tube flows through the connection pipe into the reversible motor. The reversible motor once introduced into the reversible motor is supplied to the spray nozzle through the recirculation pipe or drained out of the washing machine through drain pipe.

According as the washing liquid is discharged through the discharge pipe and then passes through the filter repeatedly, the impurities filtered by the arcuate mesh plate is accumulated on the arcuate mesh plate. In the filter of the present invention, since the arcuate mesh plate can be easily removed from the body fixed to the washing machine outside the washing machine and then it can be cleaned, the filtering function of the arcuate mesh plate can be always maintained, and further paralysis of the function of the washing machine can be prevented.

When the mesh member is assembled in the body, a user fits the bulwark and the second guide rail of the arcuate mesh plate between the mountain-shaped threshold and the first guide rail formed on the inner surface of the cylindrical side wall, and then pushes the assembled mesh member, locking lid, and annular packing into the body.

When the arcuate mesh plate is inserted, the relative position of the cylindrical knob to the mesh head must be such that the key protuberances abut the second stoppers, and thereby the second locking protuberances of the locking lid are not hindered by the first locking protuberances of the bell-mouth but can pass by the first locking protuberances.

When the mesh member is completely inserted in the body, the user rotates the locking lid. According to the rotation of the locking lid, the first locking protuberances slide along the inclined surfaces of the second locking protuberances and then tightly engaged with the upper surfaces. At that time, the mesh member does not rotate but the first arcuate engagement shelves slide along the second arcuate engagement shelves and thereby only the locking lid rotates. While the first locking protuberances are being engaged with the upper surfaces, the mesh member and the locking lid assembled therewith proceed into the body to a distance equivalent to the longitudinal width that each first locking protuberance relatively travels along each inclined surface.

According to the tight engagement between the first locking protuberances and the second locking protuberances, the assembled mesh member, locking lid, and annular packing are tightly held in the body, and the annular packing is compressed between the second step and the third annular rim. The compressed annular packing prevents leakage of the washing liquid or the rinsing water between the body and the mesh member.

When drawing out the mesh member out of the body, the user can follow a detaching process inverse to the above described assembling process.

### Brief Description of the Drawings

The above object, and other features and advantages of the present invention will become more apparent by describing in detail preferred embodiments thereof with reference to the attached drawings, in which:
FIG. 1 is a schematic sectional view of a washing machine having a filter according to one embodiment of the present invention;
FIG. 2 is an exploded perspective view of the filter shown in FIG. 1;
FIG. 3 is an enlarged perspective view of the mesh head and the locking lid of the filter shown in FIG. 2;
FIG. 4 is a partly cut-out perspective view of the body of the filter shown in FIG. 2;
FIG. 5 is a longitudinal section of the filter shown in FIG. 2;
FIG. 6 is a transverse section of the filter along K-K line in FIG. 5; and
FIGs. 7 and 8 are side elevations of the filter shown in FIG. 2, in which the assembled mesh member and locking lid are simply inserted in the body, and rotated and locked in the body, respectively.

### Description of the Preferred Embodiments

A preferred embodiment of the present invention will be described in detail with reference to the accompanying drawings.

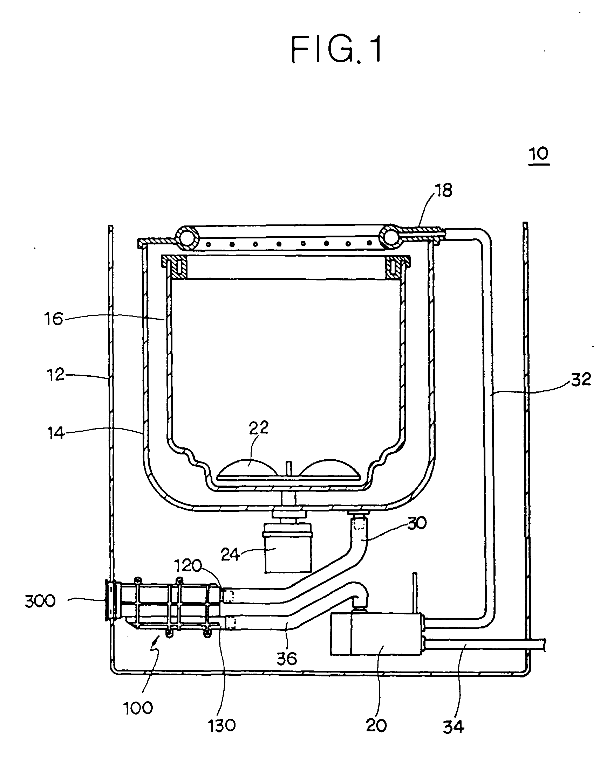

FIG. 1 illustrates a washing machine 10 having a filter 100 according to one embodiment of the present invention.

Washing machine 10 includes a housing 12, a container 14 in housing 12, and a spin tub 16 in container 14. A pulsator 22 is installed in spin tub 16. A driving motor 24 and a spray nozzle 18 are respectively disposed under and above container 14.

A filter 100 is connected through a discharge pipe 30 to container 14. Filter 100 is fixed to housing 12, and is connected through a connection pipe 36 to a reversible motor 20. A drain pipe 34 and a recirculation pipe 32 respectively extend from reversible motor 20. Drain pipe 34 extends through housing 12 out of washing machine 10, and recirculation pipe 32 is connected to spray nozzle 18.

Washing machine 10 having the above described construction washes, rinses, and dehydrates articles by the rotation of pulsator 22 or spin tub 16. In the course of the washing, rinsing, or dehydrating by washing machine 10, all or a part of the washing liquid or the rinsing water is drained out of washing machine 10 or recirculated and then sprayed through spray nozzle 18.

When the washing liquid or the rinsing water, which hereinafter will be called as the washing liquid, is drained out of washing machine 10, it flows through discharge pipe 30, filter 100, connection pipe 36, reversible motor 20, and drain pipe 34. In the meantime, the washing liquid is recirculated through discharge pipe 30, filter 100, connection pipe 36, reversible motor 20, and recirculation pipe 32, and then sprayed through spray nozzle 18. In the course of the recirculation and drainage of the washing liquid as above, filter 100 filters the washing liquid passing therethrough.

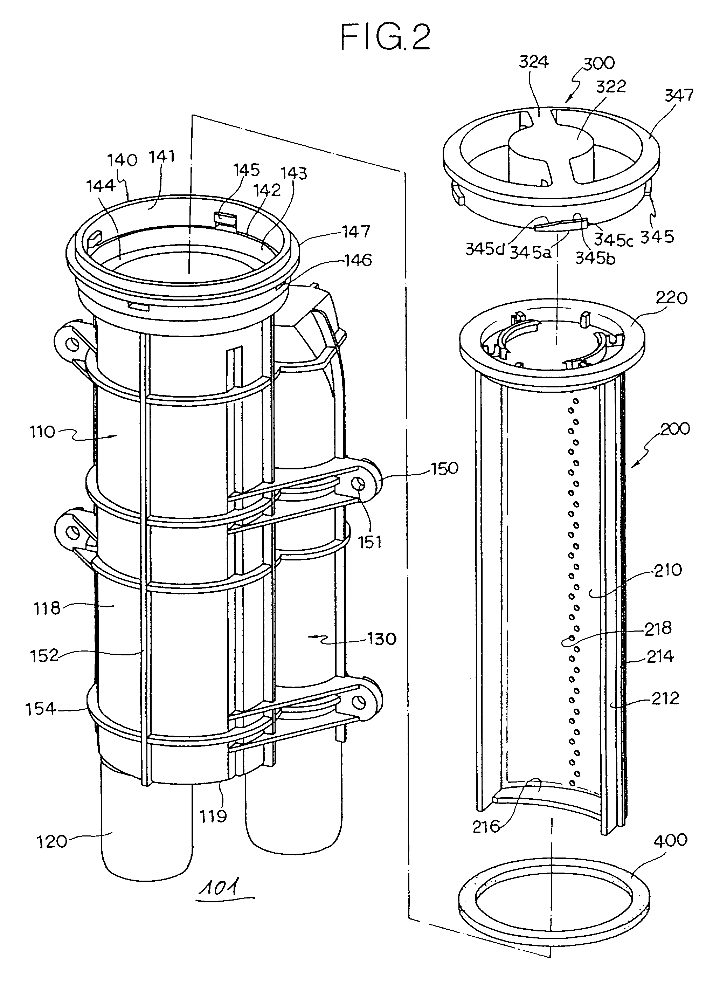

FIG. 2 shows an exploded perspective view of filter 100. Filter 100 includes a body 101, a mesh member 200, a locking lid 300, and an annular packing 400. Body 101 is connected to discharge pipe 30 and connection pipe 36. Mesh member 200 can be assembled in body 101 by locking lid 300 so as to filter out impurities from the washing liquid. Annular packing 400 prevents the washing liquid from leaking between body 101 and mesh member 200.

Body 101 has the first tube 110 and the second tube 130 incorporated with first tube 110. First tube 110 has a cylindrical side wall 118, a rear wall 119 formed integrally with the rear end of cylindrical side wall 118, and a neck section 120 extending backward from rear wall 119 and formed integrally therewith. The inner space 118a of cylindrical side wall 118 is interconnected to inner space 120a of neck section 120. The diameter of neck section 120 is smaller than the diameter of cylindrical side wall 118, and neck section 120 is eccentric with cylindrical side wall 118. Preferably, the circumference of neck section 120 abuts the circumference of rear wall 119 at one point, the diameter of neck section 120 is an half of the diameter of cylindrical side wall 118.

As shown in FIG. 1, neck section 120 of first tube 110 is connected to drain pipe 34, and second tube 130 is connected to connection pipe 36. Locking lid 300 forms a part of the outer surface of housing 12.

Referring again to FIG. 2, a bell-mouth 140 is formed integrally with the front end of cylindrical side wall 118. Bell-mouth 140 includes a first annular wall 141, a second annular wall 143 having a diameter smaller than that of first annular wall 141, a first step 142 disposed between first annular wall 141 and second annular wall 143 and formed integrally with them, a second step 144 formed integrally with the inner end of second annular wall 143 and the front end of cylindrical side wall 118. Therefore, the inner circumference of second step 144 has the same diameter with the inner diameter of cylindrical side wall 118.

A first annular rim 147 is formed on the outer surface of first annular wall 141. First annular rim 147 protrudes radially outward therefrom, and abuts housing 12 so as to support filter 100.

First annular wall 141 has four locking hole 146 penetrating therethrough and disposed inside first annular rim 147. A rectangular first locking protuberance 145 protrudes radially inward from first annular wall 141 outside each of locking hole 146. Four locking hole 146 and four first locking protuberances 145 are spaced apart from each other with regular circumferential intervals.

A plurality of longitudinal reinforcement ribs 152 and a plurality of annular reinforcement ribs 154 are formed on the outer surfaces of first tube 110 and second tube 130. Also, a plurality of fixing brackets 150 for fixing filter 100 to housing 12 of washing machine 10 are formed on the outer surfaces of first tube 110 and neck section 120. Each fixing bracket 150 has a screw hole 151, and filter 100 is fixed to housing 12 by screws or bolts (not shown) penetrating through screw hole 151.

Mesh member 200 has an arcuate mesh plate 210 extending longitudinally. Arcuate mesh plate 210 has a plurality of pores 218 formed therein. A pair of plane bulwarks 212 are formed integrally with the opposite sides of arcuate mesh plate 210. A second guide rail 214 extending longitudinally is formed on the outer surface of each bulwark 212. A rear plate 216 having a half-moon shape is formed integrally with the rear end of arcuate mesh plate 210, and a mesh head 220 for assembling locking lid 300 with mesh member 200 is formed integrally with the front end of arcuate mesh plate 210.

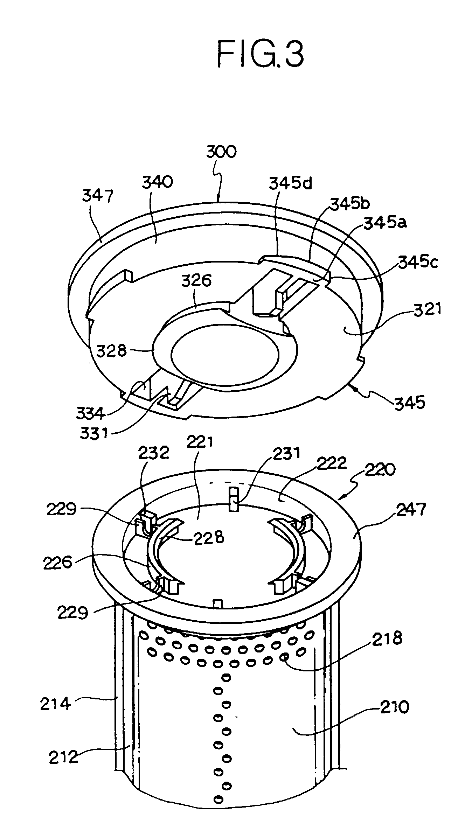

FIG. 3 is an enlarged perspective view of mesh head 220 and locking lid 300 for showing their constructions in detail.

Locking lid 300 includes an annular base 321, a center cylinder 326 extending downward from the inner circumference of annular base 321 and at a right angle to annular base 321, and outer cylinder 340 extending upward from the outer circumference of annular base 321 and at a right angle to annular base 321. Annular base 321 has a pair of opposite key holes 334 formed therein. A second annular rim 347 extends radially outward from the upper end of outer cylinder 340. Second annular rim 347 overlaps on the outer surface of housing 12, thereby improving the external appearance of housing 12, when locking lid 300 is locked in bell-mouth 140. A pair of first arcuate engagement shelves 328 protrude radially outward from the lower end of center cylinder 326 in opposite directions to each other.

Four trapezoidal second locking protuberances 345 are formed on the lower end of the outer surface of outer cylinder 340. Four second locking protuberances 345 are spaced apart from each other with regular circumferential intervals, and respectively correspond to each first locking protuberance 145. Each second locking protuberance 345 includes a lower surface 345a extending in a circumferential direction of outer cylinder 340, an upper surface 345b extending in the circumferential direction and more shortly than lower surface 345a, a side surface 345c extending longitudinally between lower surface 345a and upper surface 345b, and an inclined surface 345d extending with an inclination from lower surface 345a to upper surface 345b.

Referring to FIG. 2, a cylindrical knob 322 formed integrally with center cylinder 326 extends upward from the inner circumference of annular base 321. A pair of opposite ridges 324 are disposed between second annular rim 347 and the upper surface of cylindrical knob 322 and formed integrally with them.

Referring again to FIG. 3, a key protuberance 331 extends downward from each ridge 324 through each key hole 334 beyond annular base 321.

Mesh head 220 includes a disc-shaped base 221, a cylindrical bobbin 222 extending longitudinally outward from the outer circumference of disc-shaped base 221 and at a right angle to disc-shaped base 221, and a third annular rim 247 protruding radially outward from the front end of cylindrical bobbin 222. A pair of opposite arcuate holding brackets 226 extend longitudinally from the upper surface of disc-shaped base 221. Arcuate holding brackets 226 are disposed inside cylindrical bobbin 222 and have the same curvature with that of cylindrical bobbin 222. Each arcuate holding bracket 226 has a second arcuate engagement shelf 228 formed at the upper end thereof.

A pair of support brackets 229 for supporting each arcuate holding bracket 226 are disposed between cylindrical bobbin 222 and the opposite ends of each arcuate holding bracket 226. Support brackets 229 are formed integrally with arcuate holding bracket 226 and cylindrical bobbin 222. A pair of opposite first stoppers 231 and a pair of opposite second stoppers 232 are respectively formed integrally with disc-shaped base 221 and cylindrical bobbin 222 between two arcuate holding brackets 226. Each second stopper 232 is disposed near one end of each arcuate holding bracket 226.

Mesh member 200, annular packing 400, and locking lid 300 are assembled as follows. First arcuate engagement shelf 328 of locking lid 300 is slidably engaged with second arcuate engagement shelf 228 of mesh head 220, and accordingly mesh member 200 is assembled with locking lid 300 in relatively rotatable relation. In this case, each key protuberance 331 is disposed between each first stopper 231 and each second stopper 232, so that the travelling range of key protuberance 331 is confined between first stopper 231 and second stopper 232, and thereby the relative rotation of locking lid 300 to mesh member 200 is also restricted therebetween.

Annular packing 400 is tightly wound on cylindrical bobbin 222 of mesh head 220.

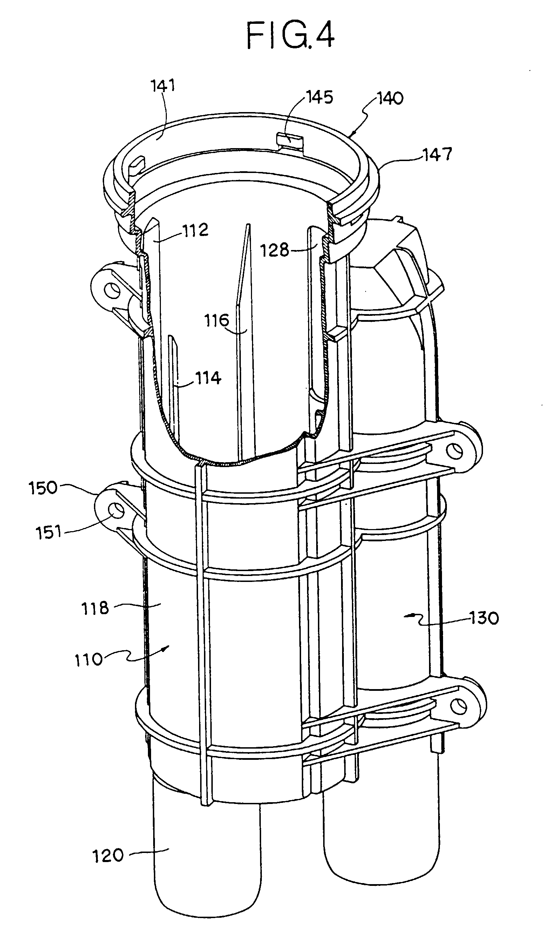

FIG. 4 is a partly cut-out perspective view of body 101. As shown in FIG. 4, an opening 128 is formed near the front end of cylindrical side wall 118 which constitutes a boundary between first tube 110 and second tube 130. First tube 110 and second tube 130 are interconnected through opening 128 to each other. A pair of mountain-shaped thresholds 112 and a pair of first guide rails 114 are formed on the inner surface of cylindrical side wall 118. Mountain-shaped thresholds 112 and first guide rails 114 extend longitudinally, respectively.

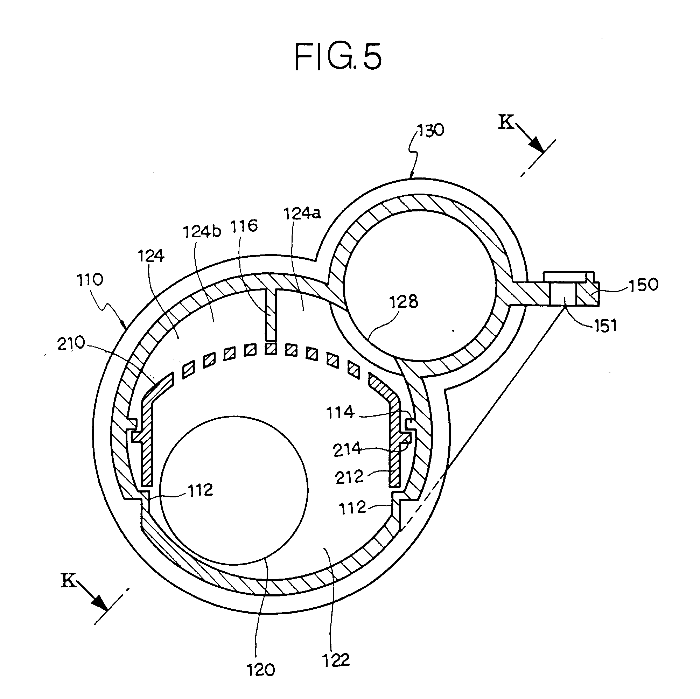

As shown in FIG. 5, mountain-shaped threshold 112 are located farther from second tube 130 than first guide rails 114. Preferably, the distance between 113 and first guide rail 114 has a value such that the upper end of bulwark 212 can contact with 113 and first guide rail 114 can contact with second guide rail 214 when mesh member 200 is inserted into body 101. When mesh member 200 has been inserted in body 101, arcuate mesh plate 210 separates inner space 118a of first tube 110 to a first chamber 122 and a second chamber 124. First chamber 122 and second chamber 124 are interconnected through spores 218 formed in arcuate mesh plate 210.

A support fence 116 is disposed on the inner surface of cylindrical side wall 118 and between first guide rails 114. Support fence 116 extends longitudinally from rear wall 119 of first tube 110 to a position in the middle of the inner surface of cylindrical side wall 118. Support fence 116 partitions second chamber 124 into a first compartment 124a and a second compartment 124b, and first compartment 124a and second compartment 124b are interconnected to each other through the space at the front of support fence 116 because support fence 116 does not extend up to the front end of cylindrical side wall 118 but to a position in the middle of the inner surface of cylindrical side wall 118 from rear wall 119 of first tube 110.

In the meantime, filter 100 filters the washing liquid passing therethrough when the washing liquid is drained or recirculated.

In filter 100, the washing liquid flows as follows. The washing liquid is introduced from discharge pipe 30 through neck section 120 into first chamber 122 of body 101. The washing liquid in first chamber 122 flows through pores 218 of arcuate mesh plate 210 into second chamber 124, so that arcuate mesh plate 210 filters off impurities from the washing liquid.

A part of the washing liquid in first chamber 122 flows into first compartment 124a of second chamber 124, and the other part into second compartment 124b. The part of the washing liquid once having flowed into first compartment 124a proceeds through opening 128 into second tube 130. The other part of the washing liquid once having flowed into second compartment 124b turns around through the front space of support fence 116 into first compartment 124a and then proceeds through opening 128 into second tube 130. In this case, the separation of the washing liquid into first compartment 124a and second compartment 124b, and the extension of the flowing path of the washing liquid through second compartment 124b intensify the vortex of the entire washing liquid in body 101, thereby strengthening the filtering force of arcuate mesh plate 210.

The washing liquid in second tube 130 flows through connection pipe 36 into reversible motor 20. Reversible motor 20 once introduced into reversible motor 20 is supplied to spray nozzle 18 through recirculation pipe 32 or drained out of washing machine 10 through drain pipe 34.

According as the washing liquid is discharged through discharge pipe 30 and then passes through filter 100 repeatedly, the impurities filtered by arcuate mesh plate 210 is accumulated on arcuate mesh plate 210. The accumulated impurities on arcuate mesh plate 210 can block off pores 218 of arcuate mesh plate 210, thereby making the recirculation and the drainage of the washing liquid impossible and paralyzing the function of 10.

In filter 100 of the present invention, since arcuate mesh plate 210 can be easily removed from body 101 fixed to washing machine 10 outside washing machine 10 and then it can be cleaned, the filtering function of arcuate mesh plate 210 can be always maintained, and further paralysis of the function of washing machine 10 can be prevented.

The above description is according to an embodiment in which filter 100 is installed in a drainage path or a recirculation path of 10. While on the other, filter 100 may be installed in a supply path, and in this case, the washing liquid can be introduced into spin tub 16 after being filtered.

Hereinafter, a process for assembling mesh member 200 in body 101 will be described in detail referring to FIGs. 5 through 8.

Body 101 is fixed to housing 12 of washing machine 10 as described above, and first annular rim 147 abuts housing 12 as shown in FIG. 1. Mesh member 200, locking lid 300, and annular packing 400 are tightly assembled with each other.

A user fits bulwark 212 and second guide rail 214 of arcuate mesh plate 210 between mountain-shaped threshold 112 and first guide rail 114 formed on the inner surface of cylindrical side wall 118, and then pushes the assembled mesh member 200, locking lid 300, and annular packing 400 into body 101. In this case, bulwark 212 and second guide rail 214 respectively contact with and slide along 113 and first guide rail 114, and thereby arcuate mesh plate 210 is prevented from rotating. FIG. 5 is a longitudinal section of filter 100 in which arcuate mesh plate 210 is completely inserted in body 101.

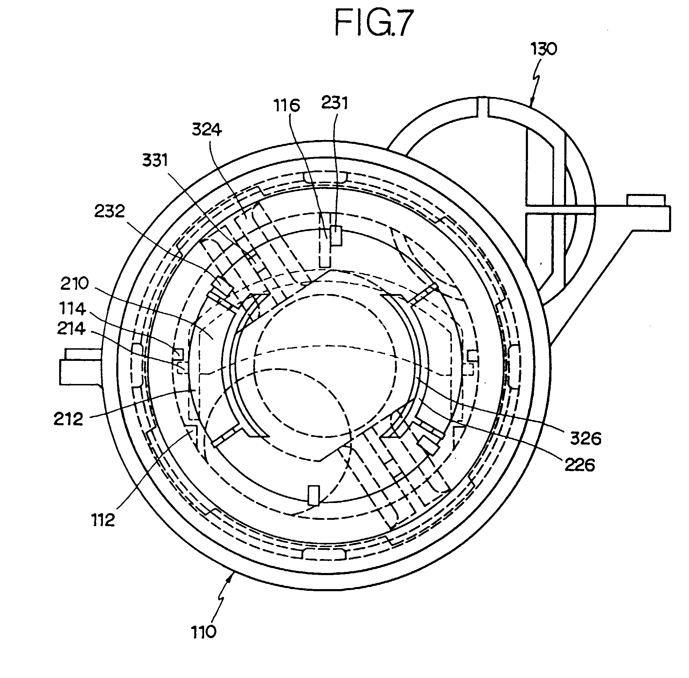

When arcuate mesh plate 210 is inserted, the relative position of cylindrical knob 322 to mesh head 220 must be such that key protuberances 331 abut second stoppers 232 as shown in FIG. 7, and thereby second locking protuberances 345 of locking lid 300 are not hindered by first locking protuberances 145 of bell-mouth 140 but can pass by first locking protuberances 145. Therefore, the assembled mesh member 200, locking lid 300, and annular packing 400 are inserted into body 101 until rear plate 216 abuts rear wall 119 of body 101.

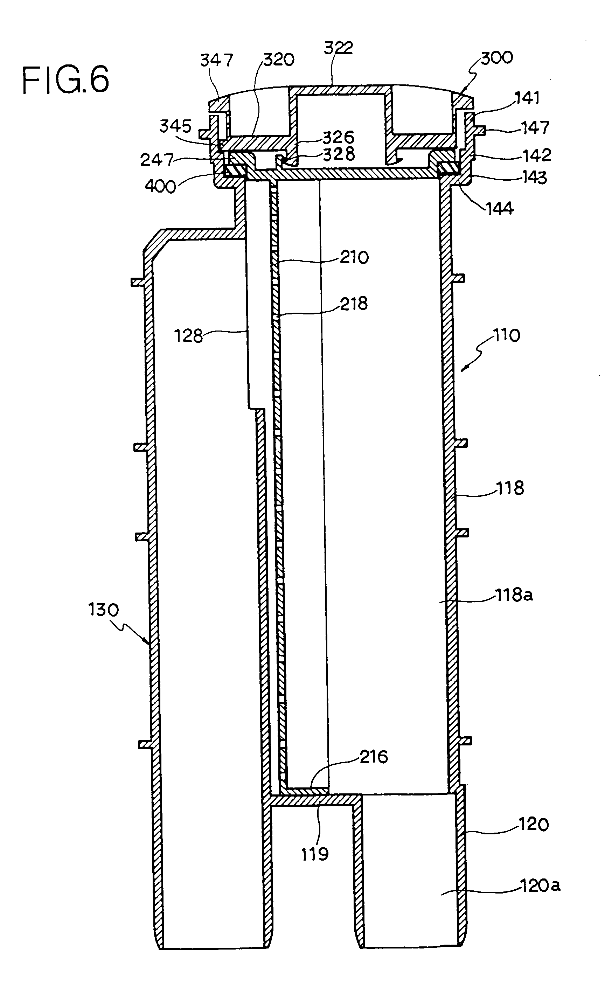

When rear plate 216 abuts rear wall 119 and thereby the assembled mesh member 200, locking lid 300, and annular packing 400 are completely inserted in body 101, each first locking protuberance 145 is aligned with a point on each inclined surface 345d in its longitudinal position, and annular packing 400 is in contact with second step 144 of bell-mouth 140 and third annular rim 247 of mesh head 220 as shown in FIG. 6.

Then, the user rotates locking lid 300. According to the rotation of locking lid 300, first locking protuberances 145 slide along inclined surfaces 345d of second locking protuberances 345 and then tightly engaged with upper surfaces 345b. At that time, mesh member 200 does not rotate but first arcuate engagement shelves 328 slide along second arcuate engagement shelves 228 and thereby only locking lid 300 rotates. While first locking protuberances 145 are being engaged with upper surfaces 345b, mesh member 200 and locking lid 300 assembled therewith proceed into body 101 to a distance equivalent to the longitudinal width that each first locking protuberance 145 relatively travels along inclined surface 345d. Then, first locking protuberances 145 become visible through locking hole 146.

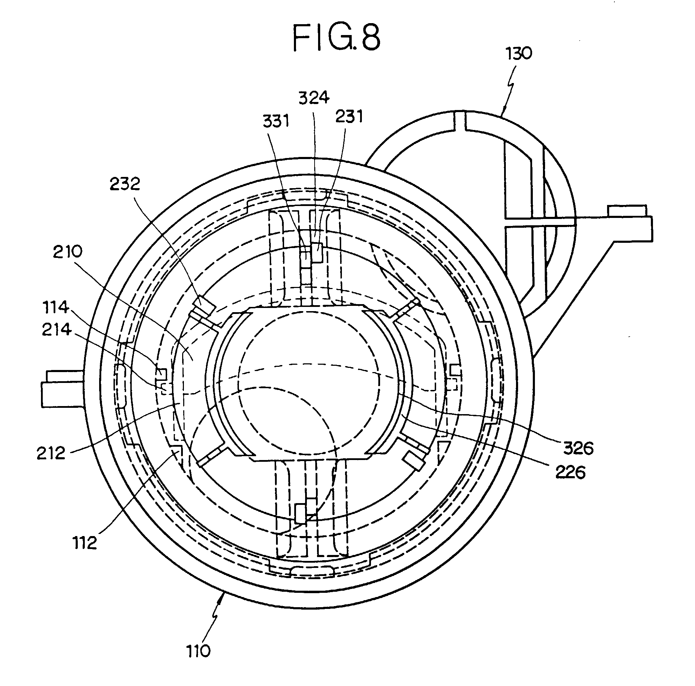

FIG. 8 shows a side view of filter 100 in which the engagement between first locking protuberances 145 and second locking protuberances 345 has been completed. According to the tight engagement between first locking protuberances 145 and second locking protuberances 345, the assembled mesh member 200, locking lid 300, and annular packing 400 are tightly held in body 101, and annular packing 400 is compressed between second step 144 and third annular rim 247. The compressed annular packing 400 prevents leakage of the washing liquid or the rinsing water between body 101 and mesh member 200.

When drawing out mesh member 200 out of body 101, the user can follow a detaching process inverse to the above described assembling process. That is, from the state that the assembled mesh member 200, annular packing 400, and locking lid 300 are tightly assembled in body 101 as shown in FIG. 8, the user grips cylindrical knob 322 and rotates locking lid 300 to the state as shown in FIG. 7, thereby releasing the engagement between first locking protuberances 145 and second locking protuberances 345.

Then, the user pulls out cylindrical knob 322, and the incorporated mesh member 200, annular packing 400, and locking lid 300 are drawn out of body 101 while bulwark 212 and second guide rail 214 are respectively guided along mountain-shaped threshold 112 and first guide rail 114.

As described above, the present invention provides filter 100 which can be installed among a recirculation path or a drainage path in washing machine 10 and can filter the recirculating washing liquid, so that purified washing liquid can be sprayed into spin tub 16 through spray nozzle 18.

Therefore, filter 100 of the present invention prevents impurities from recirculating and being sprayed onto the articles together with the washing liquid, thereby preventing the washing effect of washing machine 10 from deteriorating. Filter 100 further prevents dangers that impurities, which may be entrained in the recirculating or draining washing liquid, may block off the flowing path such as the recirculation or drainage path or may damage the flowing path, thereby paralyzing the function of 10.

Especially, filter 100 of the present invention filters the washing liquid drained at last to sewage, and accordingly it can prevent the quantity of dirts from increasing in the sewage and contribute to the reduction of water pollution and further to the conservation of nature.

In filter 100 of the present invention, arcuate mesh plate 210 can not only filter impurities according to the tight lock of the assembled mesh member 200, annular packing 400, and locking lid 300 in body 101 as described above, but also be easily separated and drawn out from body 101 outside washing machine 10 at any time. The user can maintain the filtering function of arcuate mesh plate 210 all the time and prevent the function of washing machine 10 from being paralyzed, by separating and cleaning arcuate mesh plate 210 when the washing process or the rinsing process is not performed by 10.

In addition, since filter 100 is fixed to housing 12 of washing machine 10 and locking lid 300 is exposed to the outside of washing machine 10 as shown in FIG. 1, there is provided such a convenience that arcuate mesh plate 210 can be easily assembled in and detached from body 101 of filter 100 without the separation of the entire filter 100 from 10.

Moreover, annular packing 400 compressed between body 101 fixed to housing 12 and mesh member 200 prevents leakage of the washing liquid therebetween, thereby consolidating the above convenience as a great advantage provided by the present invention.

Furthermore, filter 100 can filter the initially-introduced washing liquid before supplying it into spin tub 16 when it is installed in a water-supply path of 10.

## Claims

1. A filter for a washing machine including a housing (12), a washing tub (14) for accommodating articles to be washed in the washing machine, a first water-flowing path (30) interconnected to the washing tub (14) and a second water-flowing path (36, 34, 32) interconnected to the first water-flowing path (30), the washing tub (14) being mounted in the housing (12), the filter comprising:
a body (101) installed in the washing machine (10), the body (101) being fixed to and penetrating through the housing (12), the body being connected to the first water-flowing path (30) and the second water-flowing path (36, 34, 23),
a first means detachably fixed in the body from outside of the housing, the first means filtering a washing liquid or a rinsing water flowing from the first water-flowing path (30) through the body (101) to the second water-flowing path (36, 34, 32) when the first means is inserted and fixed in the body (101);
a second means assembled with the first means so as to detachably fixing the first means in the body (101);
a third means for assembling the first means with the second means; and
a fourth means for preventing the washing liquid or the rinsing water from leaking between the body and the first means when the first means is fixed in the body,
characterized in that the body (101) comprises a first tube (110) connected to the first water-flowing path (30), a second tube (130) connected to the first water-flowing path, and an opening (128) defined between the first tube (110) and the second tube (130), the first tube (110) and the second tube (130) being interconnected through the opening (128) to each other,
the first tube (110) comprising a cylindrical side wall (118), a rear wall (119) formed integrally with a rear end of the cylindrical side wall, and a neck section (120) formed integrally with and extending backward from the rear wall, the cylindrical side wall (118) having a first inner space (118a) interconnected to a second inner space (120a) of the neck section (120), the second inner space (120a) being interconnected to the first water-flowing path (30).

2. A filter as claimed in claim 1, wherein the neck section (120) has a diameter smaller than that of the cylindrical side wall (118), the neck section being eccentric with cylindrical side wall.

3. A filter as claimed in claim 1, wherein the neck section (120) has a diameter which is an half of that of the cylindrical side wall (118), and a circumference of the neck section abuts that of the rear wall at one point.

4. A filter as claimed in claim 1, wherein the first means (200) comprises an arcuate mesh plate (210) longitudinally extending and being detachably inserted in the first tube (110), the arcuate mesh plate (210) having a plurality of pores (218) formed in the arcuate mesh plate (210), the arcuate mesh plate (210) separating the first inner space into a first chamber (122) and a second chamber (124), the first chamber (122) and the second chamber (124) being interconnected to each other through the pores (218).

5. A filter as claimed in claim 4, wherein the cylindrical side wall (118) has a pair of mountain-shaped thresholds (112) and a pair of first guide rails (114) formed on an inner surface of the cylindrical side wall (118), the mountain-shaped thresholds (112) and the first guide rails (114) respectively extending longitudinally, and the arcuate mesh plate (210) has a pair of plane bulwarks (212) formed integrally with opposite sides of the arcuate mesh plate (210), and a pair of second guide (214) rails respectively formed on an outer surface of each bulwark (212), the bulwarks (212) and the second guide rails (214) respectively extending longitudinally, the bulwarks (212) sliding along the mountain-shaped thresholds (112) and the first guide rails (114) sliding along the second guide rails (214) while the mesh plate (210) is inserted into the first tube (110).

6. A filter as claimed in claim 4, wherein the cylindrical side wall (118) has a support fence (116) disposed on an inner surface of the cylindrical side wall (118) and between the first guide rails (114), the support fence (116) extending longitudinally from the rear wall (119) to a middle point of the inner surface of the cylindrical side wall (118), the support fence (116) partitioning the second chamber (124) into a first compartment (124a) and a second compartment (124b), and the first compartment (124a) and the second compartment (124b) being interconnected to each other through a space before the support fence (116).

7. A filter as claimed in claim 4, wherein the second means comprises a bell-mouth (140) formed integrally with a front end of the cylindrical side wall (118), and a locking lid (300) assembled with the mesh plate (210) and being detachably locked in the bell-mouth (140).

8. A filter as claimed in claim 7, wherein the bell-mouth (140) comprises a first annular wall (141), a second annular wall (143) having a diameter smaller than that of the first annular wall (141), a first step (142) disposed between and formed integrally with the first annular wall (141) and the second annular wall (142), and a second step (144) formed integrally with an inner end of the second annular wall (142) and the front end of the cylindrical side wall (118), so that an inner circumference of the second step (144) has a diameter equal to an inner diameter of the cylindrical side wall (118), the first annular wall (141) having a plurality of first locking protuberances (145) formed at an inner surface of the first annular wall (141), the first locking protuberances (145) protruding radially inward from the first annular wall (141) and being spaced apart from each other with regular circumferential intervals,
and the locking lid (300) comprises an annular base (321), a center cylinder (326) extending downward from an inner circumference of the annular base (321) and at a right angle to the annular base (321), and an outer cylinder (340) extending upward from an outer circumference of the annular base (321) and at a right angle to the annular base (321), the outer cylinder (340) having a plurality of second locking protuberances (345) formed on an outer surface of the outer cylinder (340) so as to be engaged with the first locking protuberances (145).

9. A filter as claimed in claim 8, wherein the first annular wall (141) has a first annular rim (147) formed on and protruding radially outward from an outer surface of the first annular wall (141), the first annular rim (147) abutting the housing (12) so as to support the body (101) of the filter.

10. A filter as claimed in claim 8, wherein the locking lid (300) further comprises a second annular rim (347) extending radially outward from an upper end of the outer cylinder (340); the second annular rim (347) overlapping on an outer surface of the housing (12) when the locking lid (300) is locked in the bell-mouth (140).

11. A filter as claimed in claim 8, wherein the second locking protuberances (345) are disposed on a lower end of the outer surface of the outer cylinder (340), each of the second locking protuberance (345) having a trapezoidal shape, each of the second locking protuberance (345) including a lower surface (345a) extending in a circumferential direction of the outer cylinder (340), an upper surface (345b) extending in the circumferential direction and more shortly than the lower surface, a side surface (345c) extending longitudinally between the lower surface and the upper surface, and an inclined surface (345d) extending with an inclination from the lower surface (345a) to the upper surface (345b),
whereby each of the first locking protuberances (145) slides along the inclined surface (345d) and then is tightly engaged with the upper surface (345b) of each of the second locking protuberances (345) when the locking lid (300) is rotated after being inserted in the bell-mouth (140).

12. A filter as claimed in claim 11, wherein the first annular (141) wall has a plurality of locking holes (146) penetrating through the annular wall (141), each of the locking holes (146) being disposed inside each of the first locking protuberances (145).

13. A filter as claimed in claim 8, wherein the third means comprises a mesh head (220) incorporated with a front end of the arcuate mesh plate (210), and a pair of first arcuate engagement shelves protruding radially outward from a lower end of the center cylinder in opposite directions to each other, the mesh head (220) including a disc-shaped base (221), a cylindrical bobbin (222) extending longitudinally outward from an outer circumference of the disc-shaped base (221) and at a right angle to the disc-shaped base, and a third annular rim (247) protruding radially outward from a front end of the cylindrical bobbin (222), the cylindrical bobbin (222) having a pair of opposite arcuate holding brackets (226) extending longitudinally from an upper surface of the disc-shaped base (221), each of the arcuate holding brackets having a second arcuate engagement shelf (228) formed at an upper end of each of the arcuate holding brackets (226),
whereby the third annular rim (247) is in contact with the annular base (321) of the locking lid (300), each of the first arcuate engagement shelves (228) is slidably engaged with the second arcuate engagement shelf (328), so that the locking lid (300) is assembled with the mesh head (220) in a relatively rotatable relation.

14. A filter as claimed in claim 13, wherein the holding brackets (226) have curvatures equal to that of the cylindrical bobbin.

15. A filter as claimed in claim 13, wherein a pair of support brackets (229) for supporting each of the arcuate holding brackets (226) are disposed between the cylindrical bobbin (222) and opposite ends of each of the arcuate holding bracket (226), the support brackets (229) being formed integrally with the arcuate holding bracket (226) and the cylindrical bobbin (222).

16. A filter as claimed in claim 13, wherein the locking lid (300) further comprises a cylindrical knob (322) formed integrally with the center cylinder and extending upward from the inner circumference of the annular base, and a pair of opposite ridges (324) disposed between and formed integrally with the second annular rim (347) and an upper surface of the cylindrical knob (322).

17. A filter as claimed in claim 16, wherein a pair of opposite key holes (334) are formed in the annular base (321) of the locking lid (300), and a pair of key protuberances (331) extend downward from the ridges through the key holes (334) beyond the annular base (321).

18. A filter as claimed in claim 17, wherein a pair of opposite first stoppers (231) and a pair of opposite second stoppers (232) are respectively formed integrally with the disc-shaped base (221) and the cylindrical bobbin (222); each of the first stoppers (231) being disposed every between the arcuate holding brackets (226), each of the second stoppers (232) being disposed near one end of each of the arcuate holding brackets (226), and each of the key protuberances (331) being movable between each of the first stoppers (231) and each of the second stoppers (232),
whereby a travelling range of each of the key protuberances (331) is confined between each of the first stoppers (231) and each of the second stoppers (232), and the locking lid (300) can rotate relatively to the mesh member (210) within a limitation.

19. A filter as claimed in claim 13, wherein the fourth means comprises an annular packing (400) tightly wound on the cylindrical bobbin (222) of the mesh head (220), the annular packing (400) being compressed between the second step (144) and the third annular rim (247) when the first locking protuberances (145) are engaged with the second locking protuberances (345).

20. A filter as claimed in claim 7, wherein the mesh plate (210) comprises a rear plate (216) having a half-moon shape and being formed integrally with a rear end of the arcuate mesh plate (210).

21. A filter as claimed in claim 1, wherein the first tube (110) and the second tube (130) have a plurality of longitudinal reinforcement ribs (152) and a plurality of annular reinforcement ribs (154) formed on outer surfaces of the first tube (110) and the second tube (130).

22. A filter as claimed in claim 1, wherein the first tube (110) and the second tube (130) have a plurality of fixing brackets (150) for fixing the filter to the housing (12) of the washing machine (10), the fixing brackets (150) being formed on outer surfaces of the first tube (110) and the second tube (130).

23. A filter as claimed in claim 22, wherein each of the fixing brackets (150) has a screw hole (151) formed in the fixing bracket (150), and the filter being fixed to the housing (12) by a fixing means screwed on the housing (12) through the screw hole (151).

24. A filter as claimed in claim 1, wherein the opening (128) is formed at a front portion of the cylindrical side wall (118) which constitutes a boundary between the first tube (110) and the second tube (130).

25. A filter as claimed in claim 1, wherein the washing machine (10) further comprises a spray nozzle (18) installed above the washing tub, the second water-flowing path (36, 32, 34) being interconnected to the spray nozzle (18).

26. A filter as claimed in claim 1, wherein the second water-flowing path is a drain pipe (34) extending out of the housing.

27. A filter as claimed in claim 1, wherein the washing machine (10) further comprises a spray nozzle (18) and a reversible motor (20) respectively installed above and under the washing tub (14), the second water-flowing path (36, 32, 34) being interconnected to the reversible motor (20), and the reversible motor (20) being interconnected to the spray nozzle (18) through a recirculation pipe (32) to the spray nozzle (18) and to a drain pipe (34) extending out of the housing (12).

## Patentansprüche

1. Filter für eine Waschmaschine mit einem Gehäuse (12), einem Waschkübel (14) zum Unterbringen von zu waschenden Gegenständen in der Waschmaschine, einem ersten Wasserfließweg (30) verbunden mit dem Waschkübel (14) und einem zweiten Wasserfließweg (36, 34, 32), verbunden mit dem ersten Wasserfließweg (30), dem in dem Gehäuse (12) befestigten Waschkübel (14), wobei der Filter aufweist:
ein in der Waschmaschine (10) installierter Körper (101), der an dem Gehäuse (12) befestigt ist und dieses durchdringt, wobei der Körper mit dem ersten Wasserfließweg (30) und dem zweiten Wasserfließweg (36, 34, 32) verbunden ist,
eine erste Vorrichtung, die abnehmbar in dem Körper von außerhalb des Gehäuses befestigt ist, wobei die erste Vorrichtung eine Waschflüssigkeit oder ein Spülwasser, was von dem ersten Wasserfließweg (30) durch den Körper (101) zu dem zweiten Wasserfließweg (36, 34, 32) fließt, gefiltert wird, wenn die erste Vorrichtung eingefügt und im Körper (101) befestigt wird;
eine zweite Vorrichtung zusammengebaut mit der ersten Vorrichtung, um die erste Vorrichtung abnehmbar in dem Körper (101) zu befestigen,
eine dritte Vorrichtung für das Zusammenbauen der ersten Vorrichtung mit der zweiten Vorrichtung; und
eine vierte Vorrichtung, um zu verhindern, dass die Waschflüssigkeit oder das Spülwasser zwischen dem Körper und der ersten Vorrichtung leckt, wenn die erste Vorrichtung mit dem Körper verbunden ist,
dadurch gekennzeichnet, dass der Körper (101) ein erstes Rohr (110) aufweist, das mit dem ersten Wasserfließweg (30) verbunden ist, und ein zweites mit dem ersten Wasserfließweg verbundenes Rohr (130) aufweist, und eine Öffnung (128) zwischen dem ersten Rohr (110) und dem zweiten Rohr (130), wobei das erste Rohr (110) und das zweite Rohr (130) durch die Öffnung (128) miteinander verbunden sind,
und wobei das erste Rohr (110) eine zylindrische Seitenwand (118), eine rückseitige Wand (119), die formschlüssig mit einem rückseitigen Ende der zylindrischen Seitenwand verbunden ist, und einem Nackenabschnitt (120), der formschlüssig mit der Rückwand und sich rückwärts erstreckend von der Rückwand ausgebildet ist, aufweist, wobei die zylindrische Seitenwand (118) einen ersten Innenraum (118a) mit einem zweiten Innenraum (120a) des Nackenabschnitts (120) verbunden, wobei der zweite Innenraum (120a) mit dem ersten Wasserfließweg (30) verbunden ist.

2. Ein Filter nach Anspruch 1, worin der Nackenabschnitt (120) einen Durchmesser kleiner als die zylindrische Seitenwand (118) aufweist, wobei der Nackenabschnitt exzentrisch mit der zylindrischen Seitenwand ist.

3. Ein Filter nach Anspruch 1, worin der Nackenabschnitt (120) einen Durchmesser aufweist, welcher die Hälfte der zylindrischen Seiten (118) hat, und ein Umfang des Nackenabschnittes an den der Rückwand in einem Punkt anliegt.

4. Ein Filter nach Anspruch 1, worin die erste Vorrichtung eine gewölbte Siebplatte (210) aufweist, die sich der Länge nach in das erste Rohr (110) erstreckt und abnehmbar eingebaut ist, wobei diese gewölbte Siebplatte (210) eine Vielzahl von Poren (218) aufweist, die in die gewölbte Siebplatte (210) eingebracht sind, wobei die gewölbte Siebplatte (210) den ersten Innenraum in eine erste Kammer (122) und eine zweite Kammer (124) trennt, wobei die erste Kammer (122) und die zweite Kammer (124) durch die Poren (218) miteinander verbunden sind.

5. Ein Filter nach Anspruch 4, worin die zylindrischen Seiten (218) ein Paar hügelähnliche Schwellenabsätze (112) und ein Paar erste Führungsschienen (114) aufweist, die auf einer inneren Fläche der zylindrischen Seitenwand (118) befestigt sind, wobei die hügelähnlichen Schwellenabsätze (112) und die ersten Führungsschienen (114) sich entsprechend der Länge nach erstrecken, und die gewölbte Siebplatte (210) ein Paar strömungsbrechende Wände (212) aufweist, die formschlüssig mit den gegenüberliegenden Seiten der gewölbten Siebplatte (210) befestigt sind, und ein Paar zweite Führungsschienen (214) entsprechend auf einer äußeren Fläche jeder strömungsbrechenden Wand (112) befestigt sind, wobei die strömungsbrechenden Wände und die zweiten Führungsschienen (214) entsprechend sich der Länge nach erstrecken, wobei die strömungsbrechenden Wände (212) entlang der hügelähnlichen Schwellenabsätze (112) gleiten und die ersten Führungsschienen (114) entlang der zweiten Führungsschiene (214) gleiten, während die Siebplatte (210) in das erste Rohr (110) eingeführt wird.

6. Ein Filter nach Anspruch 4, worin die zylindrische Seitenwand (118) eine stützenartige Ausbildung (116) verteilt auf einer inneren Fläche der zylindrischen Seitenwand (118) und zwischen den ersten Führungsschienen (114) aufweist, wobei sich die stützenähnlichen Ausbildungen längs von einer Rückwand (119) zu einem Mittelpunkt der inneren Fläche der zylindrischen Seitenwand (118) erstreckt, wobei die stützenartige Ausbildung (116) die zweite Kammer (124) in ein erstes Abteil (124a) und ein zweites Abteil (124b) trennt und das erste Abteil (124a) und das zweite Abteil miteinander verbunden sind durch einen Raum vor der stützenartigen Ausbildung (116).

7. Ein Filter nach Anspruch 4, worin die zweite Vorrichtung eine trompetenförmige Wellenleiterausweitung (140) aufweist, die formschlüssig in ein Frontende der zylindrischen Seitenwand (118) eingepasst ist, und ein Absperrdeckel (300), der mit der Siebplatte (210) zusammengebaut ist und abnehmbar in der trompetenförmigen Wellenleiterausweitung (140) befestigt ist.

8. Ein Filter nach Anspruch 7, worin die trompetenförmige Wellenleiterausweitung (140) ein erste ringförmige Wand (141), eine zweite ringförmige Wand (143) mit einem Durchmesser kleiner als der der ersten ringförmigen Wand (141), einen ersten Absatz (142) angeordnet zwischen der ersten kreisförmigen Wand (141) und der zweiten kreisförmigen Wand (143) angeordnet und formschlüssig darin eingeformt, und ein zweiter Absatz (144), der formschlüssig in einem inneren Ende der zweiten kreisförmigen Wand (143) und dem Frontende der zylindrischen Seitenwand (118) montiert ist, aufweist, so dass ein innerer Umfang des zweiten Absatzes (144) mit einem Durchmesser gleich dem inneren Durchmesser der zylindrischen Seitenwand (118) aufweist, die erste kreisförmige Wand (141) eine Vielzahl von ersten Verschlusserhebungen (145), die an einer inneren Fläche der ersten kreisförmigen Wand (141) befestigt sind, wobei die ersten Verschlusserhebungen (145) radial nach innen von der ersten kreisförmigen Wand (141) vorspringen und zueinander mit regelmäßigen Umfangsintervallen angeordnet sind,
und der Verschlussdeckel (300) eine ringförmige Basis (321), ein Zentrenzylinder (326), der sich von einem inneren Umfang der ringförmigen Basis (321) und in einem rechten Winkel zu der ringförmigen Basis (321) nach unten erstreckt, und ein äußerer Zylinder (340), der sich von einem äußeren Umfang der ringförmigen Basis (321) und in einem rechten Winkel zu der ringförmigen Basis (321) nach oben erstreckt, aufweist, wobei der äußere Zylinder (340) eine Vielzahl von zweiten Verschlusserhebungen (345) aufweist, die auf eine äußere Fläche des äußeren Zylinders (340) befestigt sind, um mit den ersten Verschlusserhebungen (145) einzurasten.

9. Ein Filter nach Anspruch 8, worin die erste ringförmige Wand (141) einen ersten ringförmigen Rand (147) ausgebildet auf einer äußeren Fläche der ersten ringförmigen Wand (141) und von dieser radial nach außen hervorstehend, wobei der erste ringförmige Rand (147) an das Gehäuse (12) anliegt, so dass der Körper (101) des Filters getragen wird.

10. Ein Filter nach Anspruch 8, worin der Verschlussdeckel (300) des weiteren einen zweiten ringförmigen Rand (347) aufweist, der sich radial nach außen von einem oberen Ende zu einem unteren Zylinder (340) erstreckt, wobei der zweite ringförmige Rand (347) an der äußeren Fläche des Gehäuses (12) überlappt, wenn der Verschlussdeckel (300) in der trompetenförmigen Wellenleiterausweitung (140) verschlossen ist.

11. Ein Filter nach Anspruch 8, worin zweite Verschlusserhebungen (345) auf einem unteren Ende der äußeren Fläche des äußeren Zylinders (340) angeordnet sind, wobei jede der zweiten Verschlusserhebungen (345) eine trapezartige Form aufweist, jede der zweiten Verschlusserhebungen (345) eine untere Fläche (345a) aufweist, die sich in Umfangsrichtung des äußeren Zylinders (340) erstreckt, eine obere Fläche (345b) die sich in Umfangsrichtung und kürzer als die untere Fläche erstreckt, eine Seitenfläche (345c) die sich der Länge nach zwischen der unteren Fläche und der oberen Fläche erstreckt, und eine geneigte Fläche (345d), die sich mit einer Neigung von der unteren Fläche (345a) zu der oberen Fläche (345b) erstreckt,
wobei jede der ersten Verschlusserhebungen (145) entlang der geneigten Fläche (345d) gleitet und dann fest auf der oberen Fläche (345b) von jeder der zweiten Verschlusserhebungen (345) einrastet, wenn der Verschlussdeckel (300) gedreht wird, nachdem er in die trompetenförmige Wellenleiterausweitung (140) eingesetzt wird.

12. Ein Filter nach Anspruch 11, worin die erste ringförmige Wand (141) eine Vielzahl von Verschlusslöchern (146) aufweist, welche durch die ringförmige Wand (141) durchdringen, wobei jedes der Verschlusslöcher (146) innerhalb jedes der ersten Verschlusserhebungen (145) angeordnet ist.

13. Ein Filter nach Anspruch 8, worin die dritte Vorrichtung einen Siebkopf (220) aufweist, der mit einem Frontende der bogenförmigen Siebplatte (210) zusammengebaut ist, und ein Paar von ersten bogenförmigen Verriegelungsnuten, die radial nach außen von einem unteren Ende des Zentrenzylinders in gegenüberliegender Richtung zueinander hervorstehen, den Siebkopf (220), eine scheibenförmige Basis (221) beinhaltend, eine zylindrische Spule, die sich längs nach außen von einem äußeren Umfang einer scheibenförmigen Basis (221) und in einem rechten Winkel zu der scheibenförmigen Basis erstreckt, und einen dritten ringförmigen Rand (247), der radial nach außen von einem Frontende der zylindrischen Spule (222) hervorsteht, aufweist, wobei die zylindrische Spule (222) ein Paar von gegenüberliegenden bogenförmigen Halteklammern (226) aufweist, die sich längs von einer oberen Fläche der scheibenförmigen Basis (221) erstrecken, wobei jede der bogenförmigen Halteklammern an eine zweite bogenförmige Verriegelungskonsole (228) aufweisen, die an einem oberen Ende von jeder der bogenförmigen Halteklammern (226) ausgebildet ist,
wobei der dritte ringförmige Rand (247) im Kontakt mit der ringförmigen Basis (321) des Verschlussdeckels (330) ist und jeder der ersten bogenförmigen Verriegelungskonsolen (228) verschiebbar eingerastet ist mit der bogenförmigen Verriegelungskonsole, so dass der Verschlussdeckel (300) mit dem Siebkopf (220) in relativ rotierbarer Beziehung zusammengebaut ist.

14. Ein rotierbarer Filter nach Anspruch 13, worin die Halteklammern (226) die gleichen Krümmungen wie die zylindrische Spule aufweisen.

15. Ein Filter nach Anspruch 13, worin ein Paar Trageklammern (229) zum Unterstützen der bogenförmigen Halteklammern (226) zwischen der zylindrischen Spule (222) und den gegenüberliegenden Enden der bogenförmigen Halteklammern (226) angeordnet sind, wobei die Trägerklammern (229) formschlüssig mit den bogenförmigen Halteklammern (226) und den der zylindrischen Spule (222) ausgebildet sind.

16. Ein Filter nach Anspruch 13, worin der Verschlussdeckel (300) einen zylindrischen Knopf (322), der formschlüssig mit dem Zylinder ausgebildet ist und sich aufwärts von dem inneren Umfang der ringförmigen Basis erstreckt, und ein Paar gegenüberliegende Rücken (324), die zwischen dem zweiten ringförmigen Rand (347) und einer oberen Fläche des zylindrischen Knopfes (322) angeordnet sind und dort befestigt sind.

17. Ein Filter nach Anspruch 16, worin ein Paar gegenüberliegende Ausnehmungen (334) in die ringförmige Basis (321) des Verschlussdeckels (300) eingeformt sind, und ein Paar Schlüsselerhebungen (331) sich nach unten von den Rippen durch die Ausnehmungen (334) unterhalb der ringförmigen Basis (321) erstrecken.

18. Ein Filter nach Anspruch 17, worin ein Paar von gegenüberliegenden ersten Stoppern (231) und ein Paar von gegenüberliegenden zweiten Stoppern (232) entsprechend in der scheibenförmigen Basis (221) befestigt sind und die zylindrische Spule (222), wobei hier jeder der ersten Stopper (231) zwischen den gewölbten Haltekonsolen (226) angeordnet ist, wobei jeder der zwei Stopper (232) nach einem Ende der gewölbten Haltekonsolen (226) angeordnet ist, und jede der Schlüsselerhebungen (331) verschiebbar zwischen jedem der ersten Stopper (231) und jedem der zweiten Stopper (232) angeordnet ist,
wobei ein Schrittbereich von jedem der Schlüsselerhebungen (331) begrenzt ist zwischen jedem der ersten Stopper (231) und jedem der zweiten Stopper (232), und wobei der Verschlussdeckel (300) relativ zu der Siebvorrichtung (210) innerhalb einer Limitierung rotieren kann.

19. Ein Filter nach Anspruch 13, worin die vierte Vorrichtung eine ringförmige Dichtung (400) aufweist, die fest auf die zylindrische Spule (222) des Siebkopfes (220) aufgespult ist, wobei die ringförmige Dichtung (400) zwischen dem zweiten Absatz (144) und dem dritten ringförmigen Rand (247) zusammengepresst ist wenn die erste Verschlusserhebung (145) mit der zweiten Verschlusserhebung (345) eingerastet ist.

20. Ein Filter nach Anspruch 7, worin die Siebplatte (210) eine Rückplatte (216) mit einer halbmondartigen Form aufweist und formschlüssig mit dem Rückende der gewölbten Siebplatte (210) befestigt ist.

21. Ein Filter nach Anspruch 1, worin das erste Rohr (110) und das zweite Rohr (130) ein Vielzahl von länglichen Verstärkungsrippen (152) und ringförmigen Verstärkungsrippen (154) aufweisen, die auf der äußeren Fläche des ersten Rohrs (110) und des zweiten Rohrs (130) befestigt sind.

22. Ein Filter nach Anspruch 1, worin das erste Rohr (110) und das zweite Rohr (130) eine Vielzahl von Fixierklammern (150) aufweisen, um den Filter an das Gehäuse (12) der Waschmaschine (10) zu fixieren, wobei die Fixierklammern (150) auf der äußeren Fläche des ersten Rohrs (110) und des zweiten Rohres (130) befestigt sind.

23. Ein Filter nach Anspruch 22, worin jede der Fixierklammern (150) ein Schraubenloch (151) aufweist, das in die Fixierklammer (150) eingeformt ist und der Filter an das Gehäuse (12) durch Befestigungsvorrichtungen befestigt ist, geschraubt auf das Gehäuse (12) durch das Schraubenloch (151).

24. Ein Filter nach Anspruch 1, worin die Öffnung (128) an einem Frontteil der zylindrischen Seitenwand (118) befestigt ist, welche eine Grenze zwischen dem ersten Rohr (110) und dem zweiten Rohr (130) bildet.

25. Filter nach Anspruch 1, worin die Waschmaschine (10) zusätzlich eine Sprühnase (18) aufweist, die über dem Waschkübel installiert ist, wobei der zweite Wasserfließweg (36, 32, 34) mit der Sprühnase (18) verbunden ist.

26. Ein Filter nach Anspruch 1, worin der zweite Wasserfließweg ein Rohrauslauf (34) ist, der sich aus dem Gehäuse herausreckt.

27. Ein Filter nach Anspruch 1, worin die Waschmaschine (10) zusätzlich eine Sprühnase (18) und einen reversiblen Motor (20) aufweist, die entsprechend über und unter dem Waschkübel (14) installiert sind, wobei der zweite Wasserfließweg (36, 34, 32) mit dem reversiblen Motor (20) verbunden ist, und der reversible Motor (20) mit der Sprühnase (18) durch eine Rezirkulationspumpe (32) zu der Sprühnase (18) und dem Rohrauslauf (34), der sich aus dem Gehäuse erstreckt, verbunden ist.

## Revendications

1. Filtre pour machine à laver comportant un bâti (12), une cuve de lavage (14) pour accommoder des articles à laver dans la machine à laver, une première conduite d'écoulement d'eau (30) reliée à la cuve de lavage (14) et une deuxième conduite d'écoulement d'eau (36, 34, 32) reliée à la première conduite d'écoulement d'eau (30), la cuve de lavage (14) étant montée dans le bâti (12), le filtre comprenant:
- un corps (101) installé dans la machine à laver (10), le corps (101) étant-fixé au bâti (12) et traversant ce dernier, le corps étant relié à la première conduite d'écoulement d'eau (30) et à la deuxième conduite d'écoulement d'eau (36, 34, 32),
- un premier moyen fixé de façon amovible dans le corps à partir de l'extérieur du bâti, le premier moyen filtrant un liquide de lavage ou un liquide de rinçage s'écoulant de la première conduite d'écoulement d'eau (30) à travers le corps (101) vers la deuxième conduite d'écoulement d'eau (36, 34, 32) lorsque le premier moyen est inséré et fixé dans le corps (101);
- un deuxième moyen assemblé avec le premier moyen pour fixer le premier moyen de façon amovible dans le corps (101);
- un troisième moyen pour assembler le premier moyen avec le deuxième moyen; et
- un quatrième moyen pour empêcher une fuite du liquide de lavage ou du liquide de rinçage entre le corps et le premier moyen lorsque le premier moyen est fixé dans le corps;
caractérisé en ce que le corps (101) comprend un premier tube (110) relié à la première conduite d'écoulement d'eau (30), un deuxième tube (130) relié à la première conduite d'écoulement d'eau, et un orifice (128) délimité entre le premier tube (110) et le deuxième tube (130), le premier tube (110) et le deuxième tube (130) étant reliés à travers l'orifice (128),
le premier tube (110) comprenant une paroi latérale cylindrique (118), une paroi arrière (119) faisant corps avec une extrémité arrière de la paroi latérale cylindrique, et une partie formant col (120) faisant corps avec la paroi arrière et s'étendant de cette dernière vers l'arrière, la paroi latérale cylindrique (118) comportant un premier espace intérieur (118a) relié à un deuxième espace intérieur (120a) de la partie formant col (120), le deuxième espace intérieur (120a) étant relié à la première conduite d'écoulement d'eau (30).

2. Filtre selon la revendication 1, dans lequel la partie formant col (120) a un diamètre inférieur à celui de la paroi latérale cylindrique (118), la partie formant col étant excentrique par rapport à la paroi latérale cylindrique.

3. Filtre selon la revendication 1, dans lequel la partie formant col (120) a un diamètre qui est la moitié de celui de la paroi latérale cylindrique (118) et dans lequel une circonférence de la partie formant col vient en un point en butée contre la circonférence de la paroi arrière.

4. Filtre selon la revendication 1, dans lequel le premier moyen (200) comprend une plaque perforée arquée (210) s'étendant en direction longitudinale et étant insérée de façon amovible dans le premier tube (110), la plaque perforée arquée (210) comportant une pluralité de pores (218) formés dans la plaque perforée arquée (210), la plaque perforée arquée (210) divisant le premier espace intérieur dans une première chambre (122) et une deuxième chambre (124), la première chambre (122) et la deuxième chambre (124) étant reliées à travers les pores (218).

5. Filtre selon la revendication 4, dans lequel la paroi latérale cylindrique (118) comprend une paire de degrés en forme de crête (112) et une paire de premiers rails de guidage (114) formés sur une surface intérieure de la paroi latérale cylindrique (118), les degrés en forme de crête (112) et les premiers rails de guidage (114) s'étendant respectivement en direction longitudinale, et la plaque perforée arquée (210) comprend une paire de brises-lames plans (212) faisant corps avec des côtés opposés de la plaque perforée arquée (210), et une paire de deuxièmes rails de guidage (214) respectivement formés sur une surface extérieure de chaque brise-lames (212), les brises-lames (212) et les deuxièmes rails de guidage (214) s'étendant respectivement en direction longitudinale, les brises-lames (212) glissant le long des degrés en forme de crête (112) et les premiers rails de guidage (114) glissant le long des deuxièmes rails de guidage (214) lorsque la plaque perforée (210) est insérée dans le premier tube (110).

6. Filtre selon la revendication 4, dans lequel la paroi latérale cylindrique (118) comprend une plaque de support (116) disposée sur une surface intérieure de la paroi latérale cylindrique (118) et entre les premiers rails de guidage (114), la plaque de support (116) s'étendant en direction longitudinale à partir de la paroi arrière (119) jusqu'à un point médian de la surface intérieure de la paroi latérale cylindrique (118), la plaque de support (116) divisant la deuxième chambre (124) dans un premier compartiment (124a) et un deuxième compartiment (124b), et le premier compartiment (124a) et le deuxième compartiment (124b) étant reliés par l'intermédiaire d'un espace devant la plaque de support (116).

7. Filtre selon la revendication 4, dans lequel le deuxième moyen comprend un évasement (140) faisant corps avec une extrémité frontale de la paroi latérale cylindrique (118), et un couvercle de verrouillage (300) assemblé avec la plaque perforée (210) et étant verrouillé de façon amovible dans l'évasement (140).

8. Filtre selon la revendication 7, dans lequel l'évasement (140) comprend une première paroi annulaire (141), une deuxième paroi annulaire (143) avec un diamètre inférieur à celui de la première paroi annulaire (141), un premier gradin (142) disposé entre la première paroi annulaire (141) et la deuxième paroi annulaire (142) et faisant corps avec elles, et un deuxième gradin (144) faisant corps avec une extrémité intérieure de la deuxième paroi annulaire (142) et l'extrémité frontale de la paroi latérale cylindrique (118) de manière à ce qu'une circonférence intérieure du deuxième gradin (144) ait un diamètre semblable à un diamètre intérieur de la paroi latérale cylindrique (118), la première paroi annulaire (141) comportant une pluralité de premières protubérances de verrouillage (145) formées sur une surface intérieure de la première paroi annulaire (141), les premières protubérances de verrouillage (145) faisant saillie radialement vers l'intérieur à partir de la première paroi annulaire (141) et étant espacées les unes des autres avec des intervalles circonférentiels réguliers,
et dans lequel le couvercle de verrouillage (300) comporte un socle annulaire (321), un cylindre central (326) s'étendant vers le bas à partir d'une circonférence intérieure du socle annulaire (321) et à angle droit par rapport au socle annulaire (321), et un cylindrique extérieur (340) s'étendant vers le haut à partir d'une circonférence extérieure du socle annulaire (321) et à angle droit par rapport au socle annulaire (321), le cylindrique extérieur (340) comportant une pluralité de deuxièmes protubérances de verrouillage (345) formées sur une surface extérieure du cylindre extérieur (340) de manière à s'engager dans les premières protubérances de verrouillage (145).

9. Filtre selon la revendication 8, dans lequel la première paroi annulaire (141) comporte un premier rebord annulaire (147) formé sur la surface extérieure de la première paroi annulaire (141) et s'étendant radialement vers l'extérieur à partir de celle-ci, le premier rebord annulaire (147) venant en butée contre le bâti (12) de manière à supporter le corps (101) du filtre.

10. Filtre selon la revendication 8, dans lequel le couvercle de verrouillage (300) comprend en outre un deuxième rebord annulaire (347) s'étendant radialement vers l'extérieur à partir d'une extrémité supérieure du cylindrique extérieur (340); le deuxième rebord annulaire (347) chevauchant une surface extérieure du bâti (12) lorsque le couvercle de verrouillage (300) est verrouillée dans l'évasement (140).

11. Filtre selon la revendication 8, dans lequel les deuxièmes protubérances de verrouillage (345) sont disposées sur une extrémité inférieure de la surface extérieure du cylindre extérieur (340), chacune des deuxièmes protubérances de verrouillage (345) ayant une forme trapézoïdale, chacune des deuxièmes protubérances de verrouillage (345) comportant une surface inférieure (345a) s'étendant dans une direction circonférentielle du cylindrique extérieur (340), une surface supérieure (345b) s'étendant dans la direction circonférentielle et étant plus courte que la surface inférieure, une surface latérale (345c) s'étendant en direction longitudinale entre la surface inférieure et la surface supérieure, et une surface inclinée (345d) s'étendant avec une inclination à partir de la surface inférieure (345a) vers la surface supérieure (345b),
chacune des premières protubérances de verrouillage (145) glissant le long de la surface inclinée (345d) et étant ensuite mise en contact étanche avec la surface supérieure (345b) de chacune des deuxièmes protubérances de verrouillage (345) lorsque le couvercle de verrouillage (300) est tourné après avoir été inséré dans l'évasement (140).

12. Filtre selon la revendication 11, dans lequel la première paroi annulaire (141) comporte une pluralité de trous de verrouillage (146) traversant la paroi annulaire (141), chacun des trous de verrouillage (146) étant disposé à l'intérieur de chacune des premières protubérances de verrouillage (145).

13. Filtre selon la revendication 8, dans lequel le troisième moyen comprend une tête de tamis (220) incorporée dans une extrémité frontale de la plaque perforée arquée (210), et une paire de premiers plateaux d'engagement arqués faisant saillie radialement à partir d'une extrémité inférieure du cylindre central dans des directions mutuellement opposées, la tête de tamis (220) comprenant un socle en forme de disque (221), une couronne cylindrique (222) s'étendant en direction longitudinale vers l'extérieur à partir d'une circonférence extérieure du socle en forme de disque (221) et à angle droit par rapport au socle en forme de disque, et un troisième rebord annulaire (247) faisant saillie radialement vers l'extérieur à partir d'une extrémité frontale de la couronne cylindrique (222), la couronne cylindrique (222) comportant une paire d'étriers de retenue arqués opposés (226) s'étendant en direction longitudinale à partir d'une surface supérieure du socle en forme de disque (221), chacun des étriers de retenue arqués comportant un deuxième plateau d'engagement arqué (228) formé à une extrémité supérieure de chacun des étriers de retenue arqués (226),
dans lequel le troisième rebord annulaire (247) est en contact avec le socle annulaire (321) du couvercle de verrouillage (300), chacun des premiers plateaux d'engagement arqués (228) est engagé de manière glissante dans le deuxième plateau d'engagement arqué (328) pour assembler le couvercle de verrouillage (300) avec la tête de tamis (20) d'une manière mobile en rotation l'un par rapport à l'autre.

14. Filtre selon la revendication 13, dans lequel les étriers de retenue (226) ont des courbures semblables à celle de la couronne cylindrique.

15. Filtre selon la revendication 13, dans lequel une paire d'étriers de support (229) supportant chacun des étriers de retenue arqués (226) sont disposés entre la couronne cylindrique (222) et des extrémités opposées de chacun des étriers de retenue arqués (226), les étriers de support (229) faisant corps avec l'étrier de retenue arqué (226) et la couronne cylindrique (222).

16. Filtre selon la revendication 13, dans lequel le couvercle de verrouillage (300) comporte en outre un bouton cylindrique (322) faisant corps avec le cylindre central et s'étendant vers le haut à partir de la circonférence inférieure du socle annulaire, et une paire d'entretoises opposées (324) disposées entre le deuxième rebord annulaire (347) et une surface supérieure du bouton cylindrique (322) et faisant corps avec eux.

17. Filtre selon la revendication 16, dans lequel une paire de trous de serrure opposés (334) sont formés dans le socle annulaire (321) du couvercle de verrouillage (300), et une paire de protubérances-clé (331) s'étendent vers le bas à partir des entretoises à travers les trous de serrure (334) au-delà du socle annulaire (321).

18. Filtre selon la revendication 17, dans lequel une paire de premiers arrêts opposés (231) et une paire de deuxièmes arrêts opposés (232) sont respectivement formés dans le socle en forme de disque (221) et la couronne cylindrique (222) et faisant corps avec eux; chacun des premiers arrêts (231) étant disposé entre les étriers de retenue arqués (226), chacun des deuxièmes arrêts (232) étant disposé près d'une extrémité de chacun des étriers de retenue arqués (226), et chacune des protubérances-clé (331) étant mobile entre chacun des premiers arrêts (231) et chacun des deuxièmes arrêts (232),
dans lequel une course de mouvement de chacune des protubérances-clé (331) est confinée entre chacun des premiers arrêts (231) et chacun des deuxièmes arrêts (232), et le couvercle de verrouillage (300) peut tourner de façon limitée par rapport à l'élément perforé (210).

19. Filtre selon la revendication 13, dans lequel le quatrième moyen comprend un joint d'étanchéité annulaire (400) entourant fermement la couronne cylindrique (222) de la tête de tamis (220), le joint annulaire (400) étant comprimé entre le deuxième gradin (144) et le troisième rebord annulaire (247) lorsque les premières protubérances de verrouillage (145) sont engagées dans les deuxièmes protubérances de verrouillage (345).

20. Filtre selon la revendication 7, dans lequel la plaque perforée (210) comprend une plaque arrière (216) de forme semi-lunaire et faisant corps avec une extrémité arrière de la plaque perforée arquée (210).

21. Filtre selon la revendication 1, dans lequel le premier tube (110) et le deuxième tube (130) comportent une pluralité de nervures de renforcement longitudinales (152) et une pluralité de nervures de renforcement annulaires (154) formées sur des surfaces extérieures du premier tube (110) et du deuxième tube (130).

22. Filtre selon la revendication 1, dans lequel le premier tube (110) et le deuxième tube (130) comportent une pluralité d'étriers de fixation (150) pour fixer le filtre au bâti (12) de la machine à laver (10), les étriers de fixation (150) étant formés sur des surfaces extérieures du premier tube (110) et du deuxième tube (130).

23. Filtre selon la revendication 22, dans lequel chacun des étriers de fixation (150) comporte un trou de vissage (151) formé dans l'étrier de fixation (150), et le filtre étant fixé sur le bâti (12) par l'intermédiaire d'un moyen de fixation vissé sur le bâti (12) à travers le trou de vissage (151).

24. Filtre selon la revendication 1, dans lequel l'orifice (128) est formé sur une portion frontale de la paroi latérale cylindrique (118) qui constitue une délimitation entre le premier tube (110) et le deuxième tube (130).

25. Filtre selon la revendication 1, dans lequel la machine à laver (10) comprend en outre un pulvérisateur (18) installé au-dessus de la cuve de lavage, la deuxième conduite d'écoulement d'eau (36, 32, 34) étant reliée au pulvérisateur (18).

26. Filtre selon la revendication 1, dans lequel la deuxième conduite d'écoulement d'eau est un tuyau de décharge (34) s'étendant à l'extérieur du bâti.

27. Filtre selon la revendication 1, dans lequel la machine à laver (10) comprend en outre un pulvérisateur (18) et un moteur réversible (20) installés respectivement au-dessus et au-dessous de la cuve de lavage (14), la deuxième conduite d'écoulement d'eau (36, 32, 34) étant reliée au moteur réversible (20) et le moteur réversible (20) étant relié au pulvérisateur (18) à travers un tuyau de re-circulation (32) vers le pulvérisateur (18) et à un tuyau de décharge (34) s'étendant à l'extérieur du bâti (12).
